# EUROPEAN PATENT APPLICATION

(11) **EP 4 769 013 A1**
(43) Date of publication of application: **01.07.2026**
(21) Application number: 25184724.0
(22) Date of filing: 24.06.2025
(51) Int. Cl.: G02F 1/025, G02F 1/035, G02F 1/21, G02F 1/225

(54) **PHASE SHIFTERS INTEGRATING LAYERS OF AN ELECTRO-OPTIC MATERIAL**

(30) Priority: 26.12.2024 US 202419001695
(71) Applicant: GlobalFoundries U.S. Inc., Malta, NY 12020 (US)
(72) Inventor: Anwar, Farhana, Malta, 12020 (US); Holt, Judson R., Malta, 12020 (US); Bian, Yusheng, Malta, 12020 (US)
(74) Representative: Grünecker Patent- und Rechtsanwälte PartG mbB

(57) **Abstract**

Structures for a phase shifter and methods of forming such structures. The structure comprises a first layer comprising a first electro-optic material, a second layer comprising a second electro-optic material, and a third layer between the first layer and the second layer. The third layer comprises a dielectric material that is an electrical insulator. A waveguide core is positioned on a portion of the first layer.

## Description

### BACKGROUND

The disclosure relates to photonic chips and, more specifically, to structures for a phase shifter and methods of forming such structures.

Photonic chips are used in many applications and systems including, but not limited to, data-center communication systems and data computation systems. A photonic chip includes a photonic integrated circuit comprised of photonic components, such as modulators, polarizers, and couplers, that are used to manipulate light received from a light source, such as a laser or an optical fiber.

A phase shifter is a photonic component that can be used in a photonic integrated circuit to modulate the phase of light propagating in a waveguide core. Phase shifters operating by an electro-optic mechanism have the ability to control the phase of the light through a change in the effective refractive index of the waveguide core.

Improved structures for a phase shifter and methods of forming such structures are needed.

### SUMMARY

In an embodiment of the invention, a structure for a phase shifter is provided. The structure comprises a first layer comprising a first electro-optic material, a second layer comprising a second electro-optic material, and a third layer between the first layer and the second layer. The third layer comprises a dielectric material that is an electrical insulator. A waveguide core is positioned on a portion of the first layer.

In an embodiment of the invention, a method of forming a structure for a phase shifter is provided. The method comprises forming a first layer comprising a first electro-optic material, forming a second layer comprising a second electro-optic material, and forming a third layer comprising a dielectric material that is an electrical insulator. The third layer is positioned between the first layer and the second layer, the third layer. The method further comprises forming a waveguide core positioned on a portion of the first layer.

### BRIEF DESCRIPTION OF THE DRAWINGS

The accompanying drawings, which are incorporated in and constitute a part of this specification, illustrate various embodiments of the invention and, together with a general description of the invention given above and the detailed description of the embodiments given below, serve to explain the embodiments of the invention. In the drawings, like reference numerals refer to like features in the various views.
FIG. 1 is a cross-sectional view of a structure at an initial fabrication stage of a processing method in accordance with embodiments of the invention.
FIG. 2 is a cross-sectional view of the structure at a fabrication stage of the processing method subsequent to FIG. 1.
FIG. 3 is a top view of a structure in accordance with alternative embodiments of the invention.
FIG. 3A is a cross-sectional view taken generally along line 3A-3A in FIG. 3.
FIG. 4 is a top view of a structure in accordance with alternative embodiments of the invention.
FIG. 4A is a cross-sectional view taken generally along line 4A-4A in FIG. 4.
FIG. 5 is a cross-sectional view of a structure in accordance with alternative embodiments of the invention.
FIG. 6 is a cross-sectional view of a structure in accordance with alternative embodiments of the invention.

### DETAILED DESCRIPTION

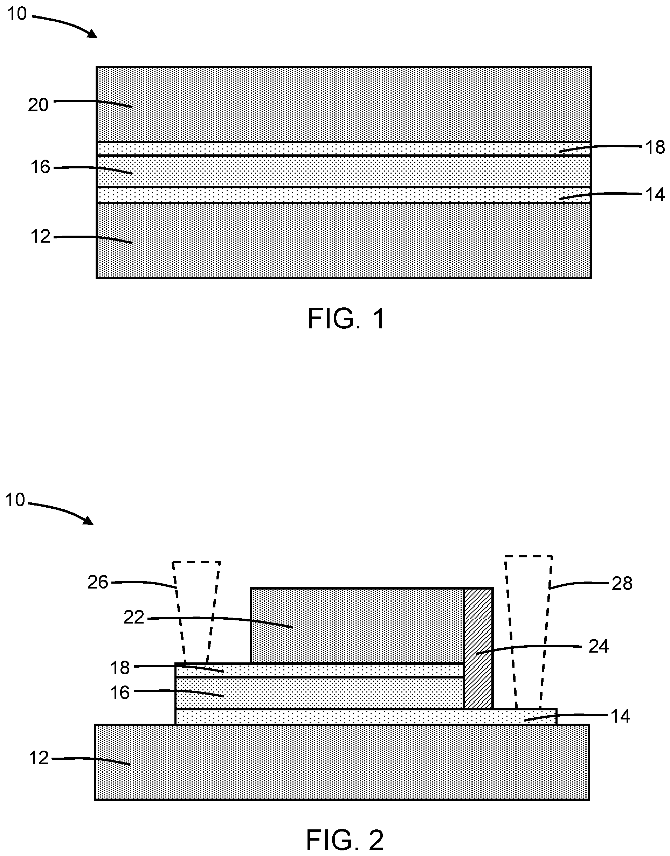

With reference to FIG. 1 and in accordance with embodiments of the invention, a structure 10 includes a substrate 12 and a layer 14, a layer 16, a layer 18, and a layer 20 that are arranged in a layer stack on, and overlie, the substrate 12. In an embodiment, the layer 20 and the substrate 12 may be comprised of a wide bandgap semiconductor material, such as silicon carbide. In an alternative embodiment, the layer 20 and/or the substrate 12 may be comprised of a different material, such as silicon or silicon nitride. In an alternative embodiment, the layer 20 and/or the substrate 12 may be comprised of a III-V compound semiconductor material, such as gallium nitride.

The layer 14 and the layer 18 may be comprised of a material that exhibits tunable or dynamic photonic properties in response to an applied stimulus, such as an electric field. In an embodiment, the material constituting the layer 14 and the layer 18 may be an electro-optic material that exhibits an electric-field-induced Pockels effect in which the refractive index varies in proportion to the strength of an applied stimulus, such as an electric field, according to a characteristic electro-optic coefficient. In an embodiment, the layer 14 and the layer 18 may be comprised of a crystalline material that lacks inversion symmetry and that is characterized by an optic axis having a refractive index is controllable by an applied electric field. In an embodiment, the layer 14 and the layer 18 may be comprised of the same electro-optic material. In an embodiment, the layer 14 and the layer 18 may be comprised of different electro-optic materials.

In an embodiment, the electro-optic material may be a two-dimensional material. In an embodiment, the two-dimensional material may be graphene, which may be formed by a sublimation process. In an alternative embodiment, the two-dimensional material may be a transition metal dichalcogenide that includes a transition metal such as molybdenum or tungsten, and a chalcogen, such as sulfur, selenium, or tellurium. Representative transition metal dichalcogenides may include, but are not limited to, tungsten disulfide, molybdenum disulfide, hafnium disulfide, zirconium disulfide, tin sulfide, and tungsten diselenide.

In alternative embodiments, the electro-optic material may be lithium niobate, lithium tantalate, lithium niobate doped with magnesium oxide, or barium titanate. In alternative embodiments, the electro-optic material may be a binary or ternary III-V compound semiconductor material, such as gallium nitride, indium gallium nitride, indium phosphide, indium gallium arsenide, gallium arsenide, indium arsenide, or indium gallium phosphide. In alternative embodiments, the electro-optic material may be an electro-optic polymer. In an alternative embodiment, the electro-optic material may be a phase change material.

In an embodiment, the layer 16 may be comprised of a dielectric material that is an electrical insulator. In an embodiment, the layer 16 may be comprised of aluminum oxide. In alternative embodiments, the layer 16 may be comprised of silicon dioxide, hafnium oxide, or hexagonal boron nitride. In an alternative embodiment, a molecular crystal seeding layer that functions to improve interface quality may be positioned between the layer 14 and the layer 16 and/or between the layer 16 and the layer 18.

In an embodiment, the formation of the structure 10 may include a wafer-bonding process. The layer 14 and the layer 18 have a set of major dimensions, such as length and width, that may be significantly greater than their respective thicknesses. In an embodiment, the layer 14 and the layer 18 may each include a single monolayer of atoms arranged in a thin sheet. In an embodiment, the thin sheets constituting the layer 14 and the layer 18 may each include about one monolayer of atoms to about three monolayers of atoms. In an embodiment, the thicknesses of the layer 14 and the layer 18 may be less than about 10 nanometers.

With reference to FIG. 2 in which like reference numerals refer to like features in FIG. 1 and at a subsequent fabrication stage, the layer 20 (FIG. 1) may be patterned by lithography and etching processes to form a waveguide core 22. In an embodiment, the layer 20 may be patterned by forming an etch mask with a lithography process, followed by removing unmasked sections with an etching process. The layer 16 and the layer 18 may be patterned by lithography and etching processes. In an embodiment, the layer 16 and the layer 18 may be patterned by forming an etch mask with a lithography process, followed by removing unmasked sections with an etching process. The layer 16 and the layer 18 may have stacked sections that are positioned between the waveguide core 22 and the layer 14, and the layer 16 and the layer 18 may have stacked sections that project laterally from the sections of the layer 16 and the layer 18 beneath the waveguide core 22.

The layer 14 may be patterned by lithography and etching processes after patterning the layer 16, the layer 18, and the layer 20. In an embodiment, the layer 14 may be patterned by forming an etch mask with a lithography process, followed by removing unmasked sections with an etching process. The layer 14 may have a section that is positioned beneath the sections of the layers 16, 18. The layer 14 may have a section that projects laterally from the section beneath the sections of the layers 16, 18.

A spacer 24 may be formed adjacent to a sidewall of the waveguide core 22. The spacer 24 may contact the projecting section of the layer 14. The spacer 24 may be comprised of a dielectric material, such as silicon dioxide, that is an electrical insulator and may be formed by depositing a conformal layer of the dielectric material and anisotropically etching the conformal layer with a reactive ion etching process.

A contact 26 may be formed that contacts the laterally-projecting section of the layer 14, and a contact 28 may be formed that contacts a section of the layer 18 that is not covered by the waveguide core 22. The spacer 24 may be laterally positioned between the contact 26 and the layer 18. A modulated electrical signal applied through the contact 26 to the layer 14 and the contact 28 as a stimulus to the layer 18 may enable the modulation of light propagating in the waveguide core 22.

The layers 14, 16, 18 are positioned in a vertical direction between the waveguide core 22 and the substrate 12. The patterned layer 14 may be larger in cross-sectional area, from a vertical perspective, than the patterned layer 16 and larger in cross-sectional area than the patterned layer 18. The waveguide core 22 may be smaller in cross-sectional area, from a vertical perspective, than any of the patterned layers 14, 16, 18.

In an embodiment, the structure 10 may be deployed as a phase shifter in a photonic integrated circuit. In an embodiment, the structure 10 may be deployed as a phase shifter in an arm of a Mach-Zehnder interference modulator. In an embodiment, the structure 10 may be deployed as a phase shifter in a ring modulator. In an embodiment, the structure 10 may be deployed as a phase shifter in an arm of a ring-assisted Mach-Zehnder interference modulator.

The electro-optic materials of the layer 16 and the layer 20 may enable high-speed modulation of optical power through properties such as third order nonlinearity and high mobility electron and hole concentrations. The layers 14, 16, 18, which may be formed with large areas, may be utilized to form additional photonic components that include the electro-optic materials of the layer 16 and the layer 20. The electro-optic materials of the layer 16 and the layer 20 may support a highly-confined optical mode because of factors such as the refractive index contrast with the material of the waveguide core 22. The wide bandgap semiconductor material of the waveguide core 22 may have a second order nonlinearity that is significantly greater than the second order nonlinearity of other materials, such as silicon, which may assist with enhancing the optical field.

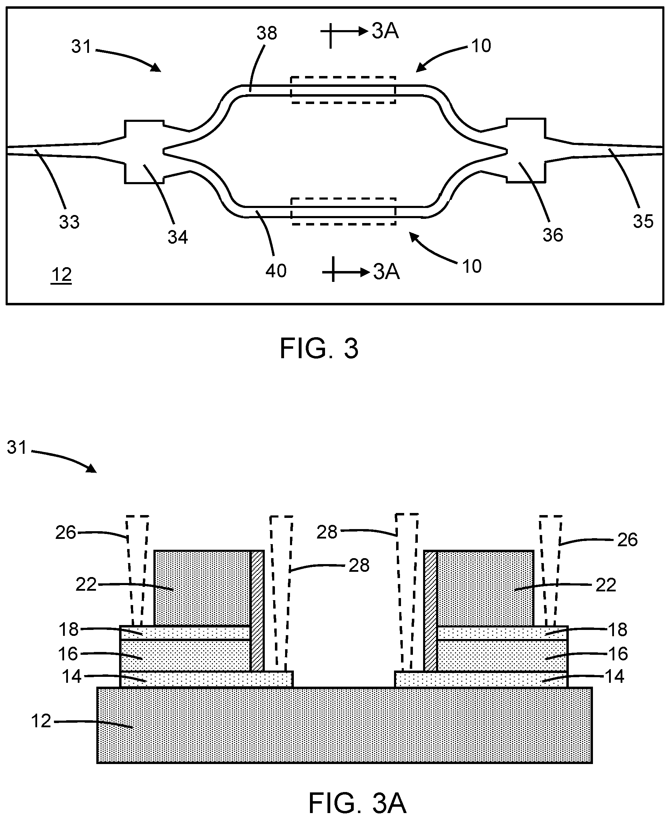

With reference to FIGS. 3, 3A and in accordance with alternative embodiments, a Mach-Zehnder interference modulator 30 may include an input optical coupler 34, an output optical coupler 36, and arms 38, 40 in the form of waveguide cores that are separately routed from the input optical coupler 34 to the output optical coupler 36. The arms 38, 40 of the Mach-Zehnder interference modulator 30 extend between the optical couplers 34, 36, which are directional optical couplers in the representative embodiment. A waveguide core 33 is coupled to the input optical coupler 34, and waveguide core 35 is coupled to the output optical coupler 36. In an embodiment, an instance of the phase shifter embodied in the structure 10 may be included in a portion of the waveguide core representing one arm 38 of the Mach-Zehnder interference modulator 30. In an embodiment, an instance of the phase shifter embodied in the structure 10 may be included in a portion of the waveguide core representing the other arm 40 of the Mach-Zehnder interference modulator 30.

The phase shifters may be used to generate a phase difference between the light propagating in the arm 38 of the Mach-Zehnder interference modulator 30 and the light propagating in the arm 40 of the Mach-Zehnder interference modulator 30 for generating modulated light exiting from the output optical coupler 36 of the Mach-Zehnder interference modulator 30. For example, a modulated electrical signal may be applied through the contacts 26, 28 to the electro-optic materials of the layer 16 and the layer 20 or one or both of the phase shifters so as to generate the modulated light. In an alternative embodiment, a sealed undercut may be formed beneath one or both of the instances of the phase shifter included in the Mach-Zehnder interference modulator 30.

The Mach-Zehnder interference modulator 30 may be integrated with a monolithic platform that has a complete back-end-of-line stack. The Mach-Zehnder interference modulator 30 may be integrated with complementary metal-oxide-semiconductor devices for radiofrequency and logic applications.

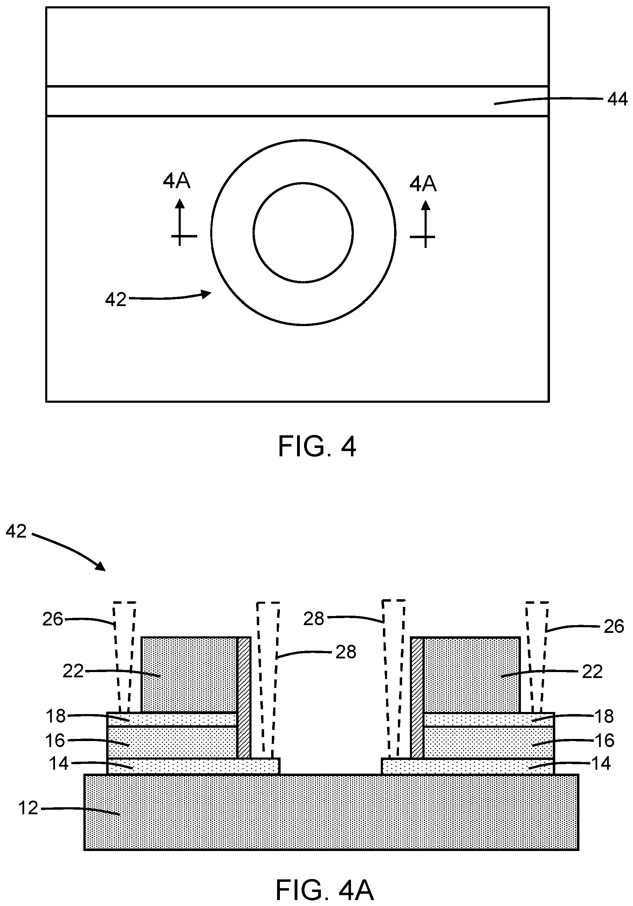

With reference to FIGS. 4, 4A and in accordance with alternative embodiments, the structure 10 may be embodied in a ring resonator 42. In an embodiment, the ring resonator 42 may have a round closed shape. A portion of a bus waveguide core 44 is positioned adjacent to a portion of the ring resonator 42. The portion of the bus waveguide core 44 participates in light coupling with the portion of the ring resonator 42. In that regard, light may be coupled across a gap between the ring resonator 42 and the bus waveguide core 44.

In the representative embodiment, the bus waveguide core 44 may include a straight portion positioned adjacent to a curved portion of the ring resonator 42. In an alternative embodiment, the bus waveguide core 44 may include a bend that is positioned adjacent to a curved portion of the ring resonator 42. In an alternative embodiment, the ring resonator 42 may have an oblong or racetrack shape in which a straight side portion of the ring resonator 42 is positioned adjacent to a straight portion of the bus waveguide core 44.

The phase shifter embodied in the structure 10 may be used to tune the resonance condition of the ring resonator.

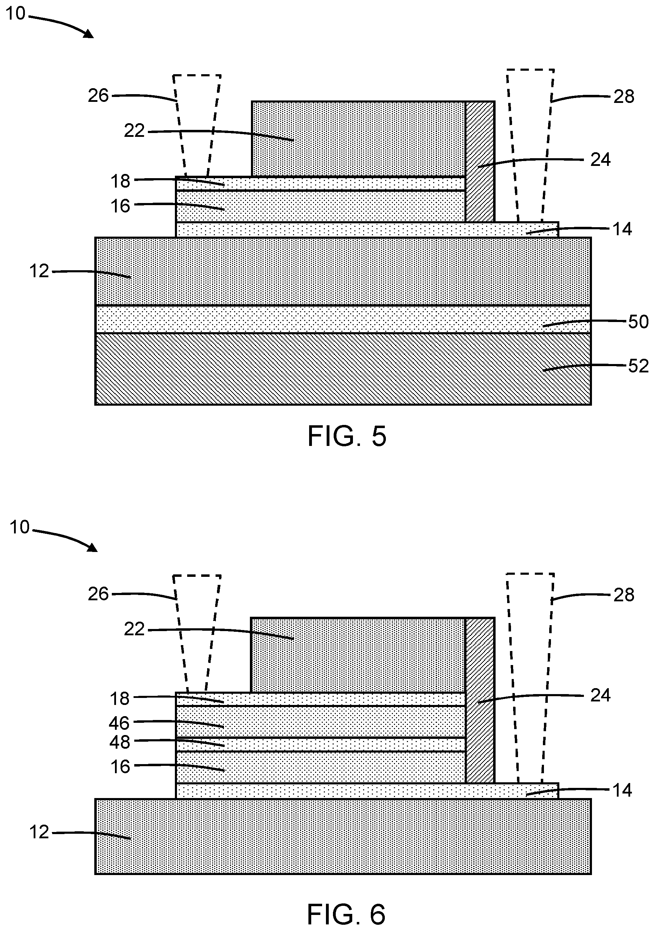

With reference to FIG. 5 and in accordance with alternative embodiments, the substrate 12 may be bonded by a dielectric layer 50 to a semiconductor substrate 52. In an embodiment, the dielectric layer 50 may be a buried insulator layer of a silicon-on-insulator substrate. In an embodiment, the dielectric layer 50 may be comprised of a dielectric material, such as silicon dioxide, and the semiconductor substrate 52 may be comprised of a semiconductor material, such as single-crystal silicon.

With reference to FIG. 6 and in accordance with alternative embodiments, a layer 46 and a layer 48 may be added to the layer stack that includes layers 14, 16, 18. In an embodiment, the layer 46 may be comprised of the same material as the layer 18. In an embodiment, the layer 48 may be comprised of the same electro-optic material as the layer 16 and layer 20. In an embodiment, the layer 48 may be comprised of a different electro-optic material than the layer 16 and layer 20. In an embodiment, the layer 46 may be comprised of the same dielectric material as the layer 18. In an embodiment, the layer 46 may be comprised of a different dielectric material than the layer 18.

The layer 46 may be positioned in the layer stack between the layer 18 and the layer 48, and the layer 48 may be positioned in the layer stack between the layer 16 and the layer 46. In an embodiment, the layers 14, 16, 18 and the layers 46, 48 may have a uniform pitch and a uniform thickness to represent a layer stack with a periodic arrangement. In alternative embodiments, the layers 14, 16, 18 and the layers 46, 48 may have a non-uniform pitch and/or a non-uniform thickness to represent a layer stack with an aperiodic arrangement.

The methods as described above are used in the fabrication of integrated circuit chips. The resulting integrated circuit chips can be distributed by the fabricator in raw wafer form (e.g., **as a single** wafer that has multiple unpackaged chips), as a bare die, or in a packaged form. The chip may be integrated with other chips, discrete circuit elements, and/or other signal processing devices as part of either an intermediate product or an end product. The end product can be any product that includes integrated circuit chips, such as computer products having a central processor or smartphones.

References herein to terms modified by language of approximation, such as "about", "approximately", and "substantially", are not to be limited to the precise value or precise condition as specified. **In** embodiments, language of approximation may indicate a range of +/-10% of the stated value(s) or the stated condition(s).

References herein to terms such as "vertical", "horizontal", etc. are made by way of example, and not by way of limitation, to establish a frame of reference. The term "horizontal" as used herein is defined as a plane parallel to a conventional plane of a semiconductor substrate, regardless of its actual three-dimensional spatial orientation. The terms "vertical" and "normal" refer to a direction or plane in the frame of reference perpendicular to the horizontal plane, as just defined. The term "lateral" refers to a direction in the frame of reference within the horizontal plane.

A feature "connected" or "coupled" to or with another feature may be directly connected or coupled to or with the other feature or, instead, one or more intervening features may be present. A feature may be "directly connected" or "directly coupled" to or with another feature if intervening features are absent. A feature may be "indirectly connected" or "indirectly coupled" to or with another feature if at least one intervening feature is present. A feature "on" or "contacting" another feature may be directly on or in direct contact with the other feature or, instead, one or more intervening features may be present. A feature may be "directly on" or "directly contacting" another feature if intervening features are absent. A feature may be "indirectly on" or in "indirect contact" with another feature if at least one intervening feature is present. Different features may "overlap" if a feature extends over, and covers a part of, another feature. A feature may "overlie" another feature if a feature is positioned "over" another feature.

The descriptions of the various embodiments of the present invention have been presented for purposes of illustration but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

**In** summary, structures for a phase shifter and methods of forming such structures are provided. The structure comprises a first layer comprising a first electro-optic material, a second layer comprising a second electro-optic material, and a third layer between the first layer and the second layer. The third layer comprises a dielectric material that is an electrical insulator. A waveguide core is positioned on a portion of the first layer.

The following embodiments are explicitly disclosed.

### Embodiment 1:

A structure for a phase shifter, the structure comprising:
a first layer comprising a first electro-optic material;
a second layer comprising a second electro-optic material;
a third layer between the first layer and the second layer, the third layer comprising a first dielectric material that is an electrical insulator; and
a first waveguide core positioned on a first portion of the first layer.

### Embodiment 2:

The structure of embodiment 1, further comprising:
a first contact coupled to a second portion of the first layer.

### Embodiment 3:

The structure of embodiment 2, wherein the second portion of the first layer projects laterally from the first portion of the first layer.

### Embodiment 4:

The structure of embodiment 2 or 3, wherein the first layer and the third layer are positioned on a first portion of the second layer, the second layer includes a second portion that projects laterally from the first portion of the second layer, and/or
wherein the structure further comprises:
a second contact coupled to the second portion of the second layer.

### Embodiment 5:

The structure of one of embodiments 2 to 4, further comprising:
a spacer laterally between the second contact and the first layer, the spacer comprising a second dielectric material that is an electrical insulator.

### Embodiment 6:

The structure of embodiment 1, wherein the first layer and the third layer are positioned on a first portion of the second layer, the second layer includes a second portion that projects laterally from the first portion of the second layer, and further comprising:
a contact coupled to the second portion of the second layer.

### Embodiment 7:

The structure of one of embodiments 1 to 6, wherein the first electro-optic material and the second electro-optic material comprise a two-dimensional material.

### Embodiment 8:

The structure of one of embodiments 1 to 7, wherein the first electro-optic material and the second electro-optic material comprise graphene.

### Embodiment 9:

The structure of one of embodiments 1 to 8, wherein the first electro-optic material and the second electro-optic material comprise lithium niobate, lithium tantalate, lithium niobate doped with magnesium oxide, or barium titanate.

### Embodiment 10:

The structure of one of embodiments 1 to 9, wherein the first dielectric material comprises aluminum oxide.

### Embodiment 11:

The structure of one of embodiments 1 to 10, further comprising:
a fourth layer comprised of a third electro-optic material; and
a fifth layer between the second layer and the fourth layer, the fifth layer comprised of a second dielectric material.

### Embodiment 12:

The structure of embodiment 11, wherein the first layer, the second layer, the third layer, the fourth layer, and the fifth layer have a periodic arrangement.

### Embodiment 13:

The structure of embodiment 11 or 12, wherein the first electro-optic material, the second electro-optic material, and the third electro-optic material comprise graphene, and the first dielectric material and the second dielectric material comprise aluminum oxide.

### Embodiment 14:

The structure of one of embodiments 1 to 13, further comprising:
a first optical coupler; and
a second optical coupler,
wherein the first waveguide core extends from the first optical coupler to the second optical coupler.

### Embodiment 15:

The structure of embodiment 14, further comprising:
a second waveguide core that extends from the first optical coupler to the second optical coupler.

### Embodiment 16:

The structure of embodiment 15, further comprising:
a fourth layer comprising a third electro-optic material;
a fifth layer comprising a fourth electro-optic material; and
a sixth layer between the fourth layer and the fifth layer, the sixth layer comprising a second dielectric material that is an electrical insulator,
wherein the second waveguide core is positioned on a portion of fourth first layer.

### Embodiment 17:

The structure of embodiment 15, wherein the first waveguide core is a first arm of a Mach-Zehnder interference modulator, and the second waveguide core is a second arm of the Mach-Zehnder interference modulator.

### Embodiment 18:

The structure of one of embodiments 11 to 16, wherein the first electro-optic material, the second electro-optic material, the third electro-optic material, and the fourth electro-optic material comprise graphene, and the first dielectric material and the second dielectric material comprise aluminum oxide.

### Embodiment 19:

The structure of one of embodiments 1 to 18, wherein the first layer, the second layer, the third layer, and the first waveguide core have a closed shape representing a ring resonator.

### Embodiment 20:

A method of forming a structure for a phase shifter, the method comprising:
forming a first layer comprising a first electro-optic material;
forming a second layer comprising a second electro-optic material;
forming a third layer comprising a dielectric material that is an electrical insulator, wherein the third layer is positioned between the first layer and the second layer; and
forming a waveguide core positioned on a portion of the first layer.

### Embodiment 21:

The method of embodiment 20, wherein the structure of one of embodiments 1 to 19 is formed.

## Claims

1. A structure for a phase shifter, the structure comprising:
a first layer comprising a first electro-optic material;
a second layer comprising a second electro-optic material;
a third layer between the first layer and the second layer, the third layer comprising a first dielectric material that is an electrical insulator; and
a first waveguide core positioned on a first portion of the first layer.

2. The structure of claim 1, further comprising:
a first contact coupled to a second portion of the first layer.

3. The structure of claim 2, wherein the second portion of the first layer projects laterally from the first portion of the first layer, and/or
wherein the first layer and the third layer are positioned on a first portion of the second layer, the second layer includes a second portion that projects laterally from the first portion of the second layer, and/or
wherein the structure further comprises:
a second contact coupled to the second portion of the second layer, and/or
a spacer laterally between the second contact and the first layer, the spacer comprising a second dielectric material that is an electrical insulator.

4. The structure of claim 1, wherein the first layer and the third layer are positioned on a first portion of the second layer, the second layer includes a second portion that projects laterally from the first portion of the second layer, and further comprising:
a contact coupled to the second portion of the second layer.

5. The structure of one of claims 1 to 4, wherein the first electro-optic material and the second electro-optic material comprise at least one of a two-dimensional material and graphene and at least one of lithium niobate, lithium tantalate, lithium niobate doped with magnesium oxide, and barium titanate.

6. The structure of one of claims 1 to 5, wherein the first dielectric material comprises aluminum oxide.

7. The structure of one of claims 1 to 6, further comprising:
a fourth layer comprised of a third electro-optic material; and
a fifth layer between the second layer and the fourth layer, the fifth layer comprised of a second dielectric material,
wherein the first layer, the second layer, the third layer, the fourth layer, and the fifth layer preferably have a periodic arrangement.

8. The structure of claim 7, wherein the first electro-optic material, the second electro-optic material, and the third electro-optic material comprise graphene, and the first dielectric material and the second dielectric material comprise aluminum oxide.

9. The structure of one of claims 1 to 8, further comprising:
a first optical coupler; and
a second optical coupler,
wherein the first waveguide core extends from the first optical coupler to the second optical coupler.

10. The structure of claim 9, further comprising:
a second waveguide core that extends from the first optical coupler to the second optical coupler.

11. The structure of claim 10, further comprising:
a fourth layer comprising a third electro-optic material;
a fifth layer comprising a fourth electro-optic material; and
a sixth layer between the fourth layer and the fifth layer, the sixth layer comprising a second dielectric material that is an electrical insulator,
wherein the second waveguide core is positioned on a portion of fourth first layer.

12. The structure of claim 10 or 11, wherein the first waveguide core is a first arm of a Mach-Zehnder interference modulator, and the second waveguide core is a second arm of the Mach-Zehnder interference modulator.

13. The structure of one of claims 7 to 12, wherein the first electro-optic material, the second electro-optic material, the third electro-optic material, and the fourth electro-optic material comprise graphene, and the first dielectric material and the second dielectric material comprise aluminum oxide.

14. The structure of one of claims 1 to 13, wherein the first layer, the second layer, the third layer, and the first waveguide core have a closed shape representing a ring resonator.

15. A method of forming a structure for a phase shifter, the method comprising:
forming a first layer comprising a first electro-optic material;
forming a second layer comprising a second electro-optic material;
forming a third layer comprising a dielectric material that is an electrical insulator, wherein the third layer is positioned between the first layer and the second layer; and
forming a waveguide core positioned on a portion of the first layer.
